# EUROPÄISCHE PATENTSCHRIFT

(11) **EP 1 856 785 B1**
(45) Veröffentlichungstag und Bekanntmachung des Hinweises auf die Patenterteilung: **20.01.2010**
(21) Anmeldenummer: 06706091.3
(22) Anmeldetag: 01.03.2006
(51) Int. Cl.: H02J 7/00

(54) **VORRICHTUNG UND VERFAHREN ZUR BEREITSTELLUNG EINER GLEICHSPANNUNG**
DEVICE AND METHOD FOR SUPPLYING DIRECT VOLTAGE
DISPOSITIF ET PROCEDE POUR FOURNIR UNE TENSION CONTINUE

(30) Priorität: 10.03.2005 DE 102005011520
(43) Veröffentlichungstag der Anmeldung: 21.11.2007
(73) Patentinhaber: DANFOSS COMPRESSORS GmbH, 24904 Flensburg (DE)
(72) Erfinder: THOMSEN, Rune, DK-6240 Løgumkloster (DK)
(74) Vertreter: Knoblauch, Andreas
(86) Internationale Anmeldenummer: PCT/DK2006/000120
(87) Internationale Veröffentlichungsnummer: WO 2006/094504

(56) Entgegenhaltungen:
- US-A1- 2003 164 694
- US-A1- 2004 112 320

## Beschreibung

Die Erfindung betrifft eine Vorrichtung zur Bereitstellung einer Gleichspannung mit einer ersten Anschlußanordnung für eine erste Gleichspannungsquelle und einer zweiten Anschlußanordnung für eine zweite Gleichspannungsquelle, wobei die Vorrichtung ein Schutzelement aufweist, das in Reihe an einen ersten Anschluß der ersten Anschlußordnung angeschlossen ist. Ferner betrifft die Erfindung ein Verfahren zur Bereitstellung einer Gleichspannung mit einer Vorrichtung, die eine erste Anschlußanordnung für eine erste Gleichspannungsquelle und eine zweite Anschlußanordnung für eine zweite Gleichspannungsquelle aufweist, wobei man ein Schutzelement an einem ersten Anschluß der ersten Anschlußanordnung anschließt und in Reihe mit dieser betreibt.

Eine derartige Vorrichtung und ein derartiges Verfahren sind aus EP 0 696 832 A2 bekannt. Es wird dort ein Gleichspannungsverbraucher von einer Gleichspannungs-Versorgungsvorrichtung gespeist, die einen Akkumulator aufweist und über einen Gleichrichter an eine externe Energiequelle angeschlossen werden kann. Die Vorrichtung weist einen elektronischen Schalter auf, der als Feldeffekttransistor ausgebildet ist und der verhindert, daß Strom aus dem Akkumulator zur externen Energiequelle gelangen kann. Mit einem weiteren Feldeffekttransistor wird ein Laden und Entladen des Akkumulators gesteuert.

In vielen Fällen sollen Gleichspannungsverbraucher mit einer konstanten kontinuierlichen Gleichspannung versorgt werden. Ein Beispiel für eine solche Anwendung sind Fahrzeuge, die Gleichspannungsverbraucher aufweisen. Solche Fahrzeuge sind beispielsweise Lastkraftwagen, Campingfahrzeuge oder auch Wasserfahrzeuge, wie beispielsweise Boote. Diese Fahrzeuge weisen beispielsweise einen Kompressor für ein Kühlaggregat oder eine Klimaanlage auf, der während der Fahrt von einem Akkumulator mit Gleichspannung versorgt wird. Befindet sich das Fahrzeug in Parkposition, so ist es möglich, daß die Gleichspannungsverbraucher in dem Fahrzeug statt von dem Akkumulator von einer externen Gleichspannungsquelle gespeist werden. Dies hat den Vorteil, daß der Akkumulator nicht unnötig entladen wird. Oft steht als externe Energiequelle eine Wechselspannungsquelle zur Verfügung, so daß zunächst die Wechselspannung mit einem Gleichrichter in eine Gleichspannung umgewandelt wird und dann den elektrischen Gleichspannungsverbrauchern im Fahrzeug zur Verfügung steht.

Bei solchen Vorrichtungen und Verfahren zur Bereitstellung einer Gleichspannung ist es zum einen wünschenswert, daß eine unterbrechungsfreie Energieversorgung gewährleistet wird und zum anderen eine Verpolung des Akkumulators im Fahrzeug keine weiteren Schäden anrichtet.

JP 09-093 833 zeigt eine Einrichtung zur unterbrechungsfreien Energieversorgung, die im Normalbetrieb von einer externen Energiequelle über einen Gleichrichter gespeist wird und einen Gleichspannungsverbraucher versorgt. Mit einem Spannungsüberwachungs-Stromkreis wird die extern gelieferte Spannung überwacht. Bei einer Versorgungsunterbrechung wird ein Feldeffekttransistor eingeschaltet, der dafür sorgt, daß ein Akkumulator mit dem Gleichspannungsverbraucher verbunden wird, so daß eine ununterbrochene Versorgung des Gleichspannungsverbrauchers sichergestellt wird.

JP 08-308 116 zeigt eine Gleichspannungsquelle und eine daran angeschlossene Schutzschaltung, die bei einer Verpolung der Gleichspannungsquelle einen Schaltkreis schützt. Hierzu weist die Schutzschaltung einen Feldeffekttransistor auf, der über eine Fotozelle angesteuert wird, die parallel zur Gleichspannungsquelle angeordnet ist.

Aus US 2004/0112320 A1 ist ein elektrisches System eines Fahrzeugs bekannt, das eine erste und eine zweite Gleichspannungsquelle aufweist, wobei zwischen den Gleichspannungsquellen ein Schutzelement angeschlossen ist, das bei einer Verpolung der ersten Gleichspannungsquelle eine fehlerhafte Arbeitsweise der Vorrichtung verhindern soll. Das Schutzelement ist dabei als Gleichstromumrichter ausgebildet. Ein Sperren des Schutzelements ist nicht möglich. Dabei ist ein Gleichstromumrichter ein relativ kompliziertes elektrisches Bauteil, das daher relativ hohe Kosten verursacht.

Der Erfindung liegt die Aufgabe zugrunde, eine Vorrichtung und ein Verfahren anzugeben, bei denen die Bereitstellung einer Gleichspannung vereinfacht wird.

Diese Aufgabe wird bei einer Vorrichtung der eingangs genannten Art dadurch gelöst, daß das Schutzelement zusätzlich an der zweiten Anschlußanordnung angeschlossen ist, wobei das Schutzelement als Transistor ausgebildet ist, dessen Gatteranschluß mit einem zweiten Anschluß der ersten Anschlußanordnung verbunden ist und so bei einer Verpolung der ersten Gleichspannungsquelle eine fehlerhafte Arbeitsweise der Vorrichtung verhindert, wobei der Gatteranschluß des Transistors auch mit einem Steueranschluß der zweiten Anschlußanordnung verbunden ist, der den Transistor bei angeschlossener zweiter Gleichspannungsquelle sperrt und damit einen Ladungsausgleich und ein Laden bzw. Entladen von einer Gleichspannungsquelle zur anderen Gleichspannungsquelle verhindert.

Mit dieser Lösung ist es nicht mehr notwendig, unterschiedliche Schaltungsanordnungen für eine Ladungssperrfunktion zwischen der ersten Gleichspannungsquelle und der zweiten Gleichspannungsquelle und für einen Verpolungsschutz der ersten Gleichspannungsquelle zu verwenden. Mit dem Schutzelement können diese beiden Funktionen kombiniert werden. Normalerweise wird eine Gleichspannungsquelle mit ihrem positiven Anschluß an ein positives Potential der Anschlußanordnung und mit ihrem negativen Anschluß an ein negatives Potential der Anschlußanordnung angeschlossen. Werden die Anschlüsse der Gleichspannungsquelle vertauscht, so daß unterschiedliche Potentiale, d.h. der negative Anschluß der Gleichspannungsquelle auf das positive Potential der Anschlußanordnung und umgekehrt, zusammentreffen, so entsteht eine Verpolung. Es besteht dann die Gefahr, daß elektrische Bauelemente und Stromkreise elektrisch überlastet werden und dadurch kurzzeitig eine Fehlfunktion zeigen oder dauerhaft zerstört werden. Mit dem Schutzelement werden solche Überlastungen, wie beispielsweise Spannungsüberhöhung, Überhitzungen oder Brandentstehung, verhindert und eine fehlerhafte Arbeitsweise der Vorrichtung auf diese Weise vermieden. Das Schutzelement kann dabei an der ersten Anschlußanordnung und an der zweiten Anschlußanordnung jeweils direkt angeschlossen sein, d.h. ohne daß zwischen dem Schutzelement und der Anschlußanordnung ein weiteres Bauelement liegt oder auch indirekt verbunden sein, indem auf einem elektrischen Pfad vom Schutzelement zur Anschlußanordnung weitere elektrische Bauelemente vorhanden sind.

Vorzugsweise ist das Schutzelement mit der ersten Gleichspannungsquelle elektrisch in Reihe geschaltet. Die Reihenschaltung besteht mindestens aus dem Schutzelement und der ersten Gleichspannungsquelle. Die erste Gleichspannungsquelle kann beispielsweise ein Akkumulator oder eine Batterie sein.

Es ist bevorzugt, daß das Schutzelement mit einem negativen Anschluß der ersten Gleichspannungsquelle verbunden ist. Das Schutzelement weist mindestens zwei Anschlüsse auf, so daß ein Anschluß des Schutzelements mit dem negativen Anschluß der ersten Gleichspannungsquelle verbunden ist. Verbunden bedeutet hier, daß zwischen dem negativen Pol der ersten Gleichspannungsquelle und dem Anschlußpunkt des Schutzelements eine direkte Verbindung besteht oder auch weitere Bauelemente zwischengeschaltet sind.

Vorzugsweise ist das Schutzelement mit einem Bezugspotential der Vorrichtung verbunden. Unter Bezugspotential der Vorrichtung wird hier beispielsweise Erde, Masse oder ein Zwischenpotential verstanden.

Vorteilhafterweise ist die zweite Gleichspannungsquelle mit einer Reihenschaltung aus erster Gleichspannungsquelle und Schutzelement elektrisch parallel geschaltet. Das Schutzelement ist demnach mit der ersten Gleichspannungsquelle in Reihe geschaltet und diese beide Elemente sind wiederum parallel zur zweiten Gleichspannungsquelle geschaltet. Insgesamt ist somit auch die erste Gleichspannungsquelle zur zweiten Gleichspannungsquelle parallel geschaltet. Ist an dieser Parallelschaltung ein Gleichspannungsverbraucher angeschlossen, so ist es leicht möglich, ohne eine Veränderung der Schaltungsanordnung zwischen der ersten und der zweiten Gleichspannungsquelle auszuwählen, um den elektrischen Verbraucher zu versorgen.

Es ist von Vorteil, daß bei angeschlossener erster Gleichspannungsquelle und angeschlossener zweiter Gleichspannungsquelle die erste Gleichspannungsquelle keine Wirkung hat. Sind zwei Gleichspannungsquellen gleichzeitig vorhanden, so ist es sinnvoll, daß der Betrieb der zweiten Gleichspannungsquelle vor der ersten Gleichspannungsquelle bevorzugt wird. Die zweite Gleichspannungsquelle ist beispielsweise eine externe Gleichspannungsquelle, deren Energievorrat unbegrenzt ist. Auf diese Weise wird die erste Gleichspannungsquelle, die weder geladen noch entladen wird, von der zweiten Gleichspannungsquelle entkoppelt.

Es ist bevorzugt, daß die erste Gleichspannungsquelle eine niedrigere Ausgangsspannung aufweist als die zweite Gleichspannungsquelle. Auf diese Weise wird ein Ladungsausgleich von der ersten zur zweiten Gleichspannungsquelle auch ohne das Schutzelement verhindert. Allerdings findet ohne weitere Maßnahmen ein Ladungsausgleich von der zweiten Gleichspannungsquelle zur ersten Gleichspannungsquelle statt.

Es ist vorgesehen, daß das Schutzelement ein Feldeffekttransistor ist mit mindestens einem Senkenanschluß, mindestens einem Quellenanschluß und mindestens einem Gatteranschluß. Ein Feldeffekttransistor ist ein spannungsgesteuertes elektrisches Bauelement, das leistungsarm arbeitet. Feldeffekttransistoren gibt es in verschiedenen Ausführungsformen, wie beispielsweise MOSFET oder IGFET. Der Vorteil eines Feldeffekttransistors ist auch, daß dieser problemlos als Schalter verwendet werden kann bei präziser Ansteuerung zum Ein- und Ausschalten, d.h. zum Verbinden oder Unterbrechen eines elektrischen Pfades.

Es ist vorgesehen, daß der Senkenanschluß des Feldeffekttransistors mit einem negativen Anschluß der ersten Anschlußanordnung verbunden ist. Auf diese Weise läßt sich ein Verpolungsschutz besonders einfach realisieren. Es ist vorgesehen, daß an den negativen Anschluß der ersten Anschlußanordnung der negative Anschluß der ersten Gleichspannungsquelle angeschlossen wird. Falls dort der positive Anschluß der ersten Gleichspannungsquelle angeschlossen ist, liegt eine Verteilung vor.

Es ist bevorzugt, daß der Quellenanschluß des Feldeffekttransistors mit einem Bezugspotential der Vorrichtung verbunden ist. Ein Substratanschluß, der von dem Quellenanschluß abzweigt, ist somit ebenfalls mit dem Bezugspotential verbunden.

Bevorzugterweise ist der Gatteranschluß des Feldeffekttransistors mit einem Steuerausgang der zweiten Gleichspannungsquelle verbunden. Es hat sich als günstig erwiesen, wenn die zweite Gleichspannungsquelle mindestens drei Anschlüsse, nämlich einen positiven Anschluß, einen negativen Anschluß und einen Steuerausgang aufweist. Mit dem Steuerausgang wird am Gatteranschluß des Feldeffekttransistors eine Steuerspannung angelegt.

Es ist vorgesehen, daß zwischen dem Gatteranschluß des Feldeffekttransistors und dem Bezugspotential der Vorrichtung eine Diode angeordnet ist. Es können Dioden jeder Ausführungsart verwendet werden. Es ist besonders vorteilhaft, wenn man eine Zener-Diode verwendet. Es ist vorgesehen, daß diese vom Gatteranschluß zum Bezugspotential sperrt und vom Bezugspotential zum Gatteranschluß stromdurchlässig ist.

In praktischer Weise ist zwischen dem Gatteranschluß des Feldeffekttransistors und einem positiven Anschluß der ersten Anschlußanordnung ein ohmscher Widerstand angeordnet. Mit dem ohmschen Widerstand wird eine Verbindung zwischen dem positiven Anschluß der ersten Anschlußanordnung und dem Gatteranschluß hergestellt. Bei eingebauter erster Gleichspannungsquelle ist dann ein Anschluß der ersten Gleichspannungsquelle über den ohmschen Widerstand mit dem Gatteranschluß verbunden. Der ohmsche Widerstand hat einen geringen Wert, so daß die Spannung zwischen Gatteranschluß und Quellenanschluß des Feldeffekttransistors etwa gleich der abgegebenen Spannung der ersten Gleichspannungsquelle ist. Ist die erste Gleichspannungsquelle verpolt, so wird dies anhand der Spannung zwischen Gatteranschluß und Quellenanschluß festgestellt und der Feldeffekttransistor führt dann keinen Strom am Senkenanschluß.

Die Aufgabe wird bei einem Verfahren der eingangs genannten Art dadurch gelöst, daß man das Schutzelement gleichzeitig an der zweiten Anschlußanordnung betreibt, wobei als Schutzelement ein Transistor verwendet wird, an dessen Gatteranschluß ein zweiter Anschluß der ersten Anschlußanordnung angeschlossen wird und so bei einer Verpolung der ersten Gleichspannungsquelle eine fehlerhafte Arbeitsweise der Vorrichtung verhindert, wobei am Gatteranschluß des Transistors auch ein Steueranschluß der zweiten Anschlußanordnung angeschlossen wird, der den Transistor bei angeschlossener zweiter Gleichspannungsquelle sperrt und damit einen Ladungsausgleich und ein Laden bzw. Entladen von der einen Gleichspannungsquelle zur anderen Gleichspannungsquelle verhindert.

Indem man das Schutzelement gleichzeitig an der ersten Anschlußanordnung und an der zweiten Anschlußanordnung betreibt, stellt man eine Verbindung zwischen der ersten Anschlußanordnung und der zweiten Anschlußanordnung her. Auf diese Weise kann man überwachen, ob eine der beiden Gleichspannungsquellen angeschlossen ist oder sogar beide Gleichspannungsquellen vorhanden sind. Bei zwei vorhandenen Gleichspannungsquellen sorgt das Schutzelement dafür, daß die erste Gleichspannungsquelle keine Funktion hat und die zweite Gleichspannungsquelle den Gleichspannungsverbraucher mit einer Gleichspannung versorgt. Unabhängig davon, ob die zweite Gleichspannungsquelle vorhanden ist oder nicht wird zusätzlich durch das Schutzelement noch festgestellt, ob die erste Gleichspannungsquelle verpolt ist. Das Schutzelement wird so betrieben, daß keine externe Steuerung zur Ansteuerung des Schutzelements notwendig ist. Ein eventuell vorhandener Steueranschluß an einer der beiden Gleichspannungsquellen wird nicht als externer Anschluß gesehen, sondern gehört zur Vorrichtung.

Es ist besonders bevorzugt, daß man mit dem Schutzelement einen Ladungsausgleich von der zweiten Gleichspannungsquelle zur ersten Gleichspannungsquelle verhindert. Ein Ladungsausgleich ist beispielsweise ein Stromfluß, der von der einen Gleichspannungsquelle zur anderen Gleichspannungsquelle gelangt. Mit dem Schutzelement wird sowohl ein Ladungsausgleich von der ersten zur zweiten Gleichspannungsquelle wie auch ein Ladungsausgleich von der zweiten zur ersten Gleichspannungsquelle verhindert. Auf diese Weise arbeiten die beiden Gleichspannungsquellen unabhängig voneinander, wobei das Schutzelement koordiniert, welche Gleichspannungsquelle eine Gleichspannung an den Gleichspannungsverbraucher liefert. Dabei ist es günstig, wenn mit einer Umschaltung im Schutzelement die eine Gleichspannungsquelle eingeschaltet wird und die andere Gleichspannungsquelle ausgeschaltet wird. So wird auch eine unterbrechungsfreie Energieversorgung hergestellt.

Es ist besonders bevorzugt, daß ein Steuerausgang der zweiten Gleichspannungsquelle, der mit einem Gatteranschluß eines Feldeffekttransistors als Schutzelement verbunden ist, einen Spannungswert an dem Gatteranschluß abgibt in Abhängigkeit einer angeschlossenen zweiten Gleichspannungsquelle. Ein Feldeffekttransistor ist ein geeignetes Schutzelement, das leistungsarm arbeitet und mindestens drei Anschlüsse aufweist, wovon mindestens einer an die erste Anschlußanordnung angeschlossen ist und mindestens einer an die zweite Anschlußanordnung angeschlossen ist. Ist der Gatteranschluß des Feldeffekttransistors mit der Anschlußanordnung der zweiten Gleichspannungsquelle verbunden, so kann zunächst mit dem Feldeffekttransistor festgestellt werden, ob die zweite Gleichspannungsquelle an der zweiten Anschlußanordnung vorhanden ist. Ist dies der Fall, so bewirkt der Feldeffekttransistor, daß allein die zweite Gleichspannungsquelle den Gleichspannungsverbraucher versorgt und die erste Gleichspannungsquelle ohne Funktion ist. Hierzu kann eine Spannung, beispielsweise eine Steuerspannung der zweiten Gleichspannungsquelle genutzt werden, wobei die Spannung einen Wert größer, kleiner oder gleich Null Volt annehmen kann. Die erste Gleichspannungsquelle bleibt solange inaktiv, bis die zweite Gleichspannungsquelle entfernt wird. Ist die erste Gleichspannungsquelle die einzige vorhandene Gleichspannungsquelle, so speist diese den Gleichspannungsverbraucher.

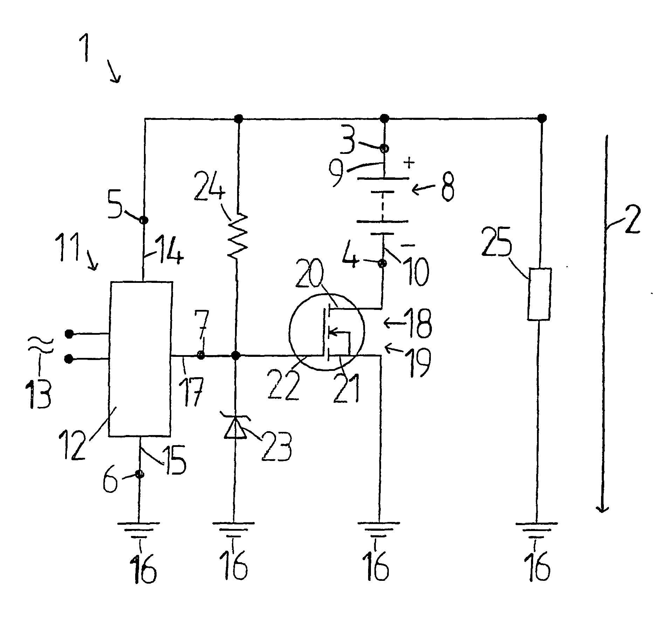

Die Erfindung wird im folgenden anhand eines bevorzugten Ausführungsbeispiels in Verbindung mit der Zeichnung näher beschrieben. Hierin zeigt
- die einzige Figur: eine schematische Darstellung einer Vorrichtung zur Bereitstellung einer Gleichspannung.

Die einzige Figur zeigt schematisch eine Vorrichtung 1 zur Bereitstellung einer Gleichspannung 2 mit einer ersten Anschlußanordnung 3, 4 und einer zweiten Anschlußanordnung 5, 6, 7. An der ersten Anschlußanordnung 3, 4 ist eine erste Gleichspannungsquelle 8 angeschlossen. Die erste Gleichspannungsquelle 8 weist hier zwei Einheiten auf, die miteinander verschaltet sind. Nach außen zugänglich ist ein positiver Anschluß 9 und ein negativer Anschluß 10 der ersten Gleichspannungsquelle 8. Die erste Gleichspannungsquelle 8 ist so an der ersten Anschlußanordnung 3, 4 elektrisch kontaktiert, daß der positive Anschluß 9 der ersten Gleichspannungsquelle 8 an dem positiven Anschluß 3 der Anschlußanordnung 3, 4 und der negative Anschluß 10 der ersten Gleichspannungsquelle 8 an dem negativen Pol 4 der ersten Anschlußanordnung angeschlossen ist. Die erste Gleichspannungsquelle 8 ist somit ordnungsgemäß angeschlossen und nicht verpolt.

An der zweiten Anschlußanordnung 5, 6, 7 ist eine zweite Gleichspannungsquelle 11 angeschlossen, die einen Gleichrichter 12 aufweist, der von einer externen Wechselspannungsquelle 13 gespeist wird. Ein positiver Anschluß 14 der zweiten Gleichspannungsquelle 11 ist mit einem positiven Anschluß 5 der zweiten Anschlußanordnung 5, 6, 7 verbunden. Ein negativer Anschluß 15 der zweiten Gleichspannungsquelle 11 ist an einen negativen Anschluß 6 der zweiten Anschlußanordnung 5, 6, 7 angeschlossen. Der negative Anschluß 6 der zweiten Anschlußanordnung 5, 6, 7 ist gleichzeitig mit einem Bezugspotential 16 der Vorrichtung 1 verbunden. Im vorliegenden Fall weist die zweite Anschlußanordnung 5, 6, 7 einen weiteren Anschluß auf, der hier als Steueranschluß 7 verwendet wird. Dieser Steueranschluß 7 ist mit einem Steuerausgang 17 der zweiten Gleichspannungsquelle 11 verbunden.

Die Ausgangsspannung der zweiten Gleichspannungsquelle 11 zwischen dem positiven Anschluß 5 und dem negativen Anschluß 6 beträgt im vorliegenden Fall 27 Volt. Dies ist gleichzeitig die Ausgangsspannung des Gleichrichters 12. Die Ausgangsspannung der ersten Gleichspannungsquelle 8 zwischen dem positiven Anschluß 9 und dem negativen Anschluß 10 der ersten Gleichspannungsquelle 8 beträgt im vorliegenden Fall 12 Volt. Die Ausgangsspannung der ersten Gleichspannungsquelle 8 ist somit kleiner als die Ausgangsspannung der zweiten Gleichspannungsquelle 11. Aufgrund der Potentialdifferenz würde ohne weitere Maßnahmen ein Ladungsausgleich von der zweiten Gleichspannungsquelle 11 zu der ersten Gleichspannungsquelle 8 stattfinden. Dies wird jedoch durch ein Schutzelement 18 verhindert, das als Feldeffekttransistor 19 ausgeführt ist und einen Senkenanschluß 20 (engl. drain), einen Quellenanschluß 21 (engl. source) und einen Gatteranschluß 22 (engl. gate) aufweist. Der Feldeffekttransistor 19 ist beispielsweise vom Typ 2804 von International Rectifier.

Der Feldeffekttransistor 19 ist elektrisch in Reihe geschaltet mit der ersten Gleichspannungsquelle 8. Dabei ist der Senkenanschluß 20 an dem negativen Anschluß 4 der ersten Anschlußanordnung 3, 4 angeschlossen. Der Quellenanschluß 21 hingegen ist am Bezugspotential 16 der Vorrichtung 1 angeschlossen. Der Gatteranschluß 22 des Feldeffekttransistors 19 ist mit dem Steueranschluß 7 der zweiten Anschlußanordnung 5, 6, 7 verbunden. Zwischen dem Gatteranschluß 22 und dem Steueranschluß 7 zweigt eine elektrische Verbindung ab, die eine Diode 23 aufweist, hier in der Ausführungsform einer Zener-Diode, und zum Bezugspotential 16 der Vorrichtung 1 führt. Die Diode 23 ist vom Gatteranschluß 22 in Richtung Bezugspotential 16 sperrend. Vom Gatteranschluß 22 und vom Steueranschluß 7 führt eine weitere elektrische Verbindung zum positiven Anschluß 3 der ersten Anschlußanordnung 3, 4 und gleichzeitig zum positiven Anschluß 5 der zweiten Anschlußanordnung 5, 6, 7. In diesem Pfad parallel zur Reihenschaltung aus erster Gleichspannungsquelle 8 und Schutzelement 18 ist ein ohmscher Widerstand 24 mit einem Wert von 330 Kiloohm angeordnet.

Es werden nun drei verschiedene Betriebsweisen der Vorrichtung 1 betrachtet. Bei allen drei Betriebsweisen ist die erste Gleichspannungsquelle 8 an der ersten Anschlußanordnung angeschlossen. Bei den ersten beiden Betriebsweisen ist keine zweite Gleichspannungsquelle 11 vorhanden. Dabei ist an dem positiven Anschluß 5, dem negativen Anschluß 6 und dem Steueranschluß 7 der zweiten Anschlußanordnung 5, 6, 7 keine vorgegebene Spannung vorhanden, so daß diese Anschlüsse 5, 6, 7 einen beliebigen Zustand annehmen können.

Eine Last 25 ist für einen ersten Gleichspannungsbereich zwischen 9,6 Volt und 17 Volt und einen zweiten Gleichspannungsbereich zwischen 21 Volt und 31 Volt ausgelegt. In diesen Gleichspannungsbereichen liegen die Versorgungsspannungen der ersten und der zweiten Gleichspannungsquelle 8, 11, nämlich etwa 12 Volt bzw. 24 Volt. Die abgegebene Gleichspannung der ersten und der zweiten Gleichspannungsquelle 8, 11 werden beispielsweise zusätzlich noch mit einem Umformer auf 48 Volt erhöht, um beispielsweise einen Verdichter als Last 25 zu versorgen. Die angeschlossene Last 25 sind beispielsweise ein oder mehrere Gleichspannungsverbraucher.

Bei der ersten Betriebsweise ist die erste Gleichspannungsquelle 8 ordnungsgemäß mit richtiger Polarität, also nicht verpolt, an die erste Anschlußanordnung 3, 4 angeschlossen. Die zweite Gleichspannungsquelle 11 ist nicht vorhanden. Die erste Gleichspannungsquelle 8 stellt etwa 12 Volt als Ausgangsspannung zur Verfügung. Hierdurch wird ein Strom durch den ohmschen Widerstand 24 und die Diode 23 verursacht. Da die Diode 23 mit einer Sperrspannung von 15 Volt kaum Strom durchläßt, entsteht ein Spannungsabfall am Feldeffekttransistor 19 zwischen dem Gatteranschluß 22 und dem Quellenanschluß 21. Durch diesen Spannungsabfall wird der Feldeffekttransistor 19 im eingeschalteten Zustand gehalten. Im eingeschalteten Zustand des Feldeffekttransistors 19 fließt im Feldeffekttransistor 19 ein Strom vom Senkenanschluß 20 über den Quellenanschluß 21 zum Bezugspotential 16. Hierdurch ist die erste Gleichspannungsquelle 8 parallel zu einer angeschlossenen Last 25 geschaltet, die kontinuierlich mit einer konstanten Gleichspannung der ersten Gleichspannungsquelle 8 versorgt wird.

Bei der zweiten Betriebsweise ist die erste Gleichspannungsquelle 8 verpolt an die erste Anschlußanordnung 3, 4 angeschlossen und die zweite Gleichspannungsquelle 11 nicht mit der zweiten Anschlußanordnung 5, 6, 7 verbunden. Der Feldeffekttransistor 19 verbindet dabei einen Stromfluß zur angeschlossenen Last 25. Dies geschieht dadurch, daß nun an dem Feldeffekttransistor 19 zwischen dem Gatteranschluß 22 und dem Quellenanschluß 21 eine negative Spannung anliegt. Dadurch bleibt der Feldeffekttransistor 19 in einem geschlossenen Zustand und verhindert einen Stromfluß von dem negativen Anschluß 10 der ersten Gleichspannungsquelle 8 zum Bezugspotential 16. An der Last 25 liegt dann keine Gleichspannung 2 an. Der oder die angeschlossenen Verbraucher als Last 25 werden somit bei einer Verpolung der ersten Gleichspannungsquelle 8 geschützt.

Bei der dritten Betriebsweise der Vorrichtung 1 ist die zweite Gleichspannungsquelle 11 mit einer Ausgangsspannung von 27 Volt an der zweiten Anschlußanordnung 5, 6, 7 angeschlossen, so wie in der Figur dargestellt und zuvor beschrieben. Die zweite Gleichspannungsquelle 11 stellt an ihrem Steuerausgang 17 eine Steuerspannung bereit, die im vorliegende Fall Null Volt beträgt. Die erste Gleichspannungsquelle 8 mit einer Ausgangsspannung von 12 Volt ist dabei ordnungsgemäß mit richtiger Polarität, d.h. nicht verpolt, an der ersten Anschlußanordnung 3, 4 angeschlossen. Sobald die zweite Gleichspannungsquelle 11 vorhanden ist, wird an dem Steueranschluß 7 der zweiten Anschlußanordnung 5, 6, 7 das Potential auf Null Volt gehalten, so daß der Gatteranschluß 22 des Feldeffekttransistors 19 ebenfalls ein Potential von Null Volt annimmt. Zwischen dem Senkenanschluß 20 und dem Gatteranschluß 22 liegen dann etwa 15 Volt an. Hierdurch wird der Feldeffekttransistor 19 in seinem ausgeschalteten Zustand gehalten und ein Stromfluß vom Senkenanschluß 20 zum Bezugspotential 16 ist nicht möglich. Dies bedeutet, daß die erste Gleichspannungsquelle 8 in diesem Moment keine Funktion hat. Sie wird weder entladen noch wird sie von der zweiten Gleichspannungsquelle 11 geladen. Bei dieser Betriebsweise wird die Last 25 von der zweiten Gleichspannungsquelle 11 mit einer konstanten Gleichspannung 2 versorgt.

Insgesamt verhindert der Feldeffekttransistor 19 durch seine Beschaltung eine fehlerhafte Arbeitsweise der Vorrichtung 1 bei einer verpolten ersten Gleichspannungsquelle 8 und ein Aufladen und Entladen der ersten Gleichspannungsquelle 8 bei vorhandener zweiten Gleichspannungsquelle 11. Der Feldeffekttransistor 19 übernimmt somit gleichzeitig zwei Funktionen, so daß sich die Vorrichtung 1 zur Bereitstellung einer Gleichspannung 2 vereinfacht, ohne daß Sicherheitsaspekte vernachlässigt werden.

Selbstverständlich ist es auch möglich, daß die beschriebene Vorrichtung 1 im vorgesehenen Betrieb mit einer nicht verpolten ersten Gleichspannungsquelle 8 betrieben wird, deren positiver Anschluß 9 an das Schutzelement 18 angeschlossen ist. Dementsprechend sind auch die Anschlüsse 14, 15 der zweiten Gleichspannungsquelle 11 vertauscht, so daß der positive Anschluß 14 an dem Anschluß 6 und der negative Anschluß 15 an dem Anschluß 5 der zweiten Anschlußanordnung 5, 6, 7 angeschlossen ist. Das Bezugspotential 16 kann dabei beibehalten werden und nimmt folglich ein positives Potential an. Auch ist es möglich, daß die Vorrichtung 1 an den negativen Anschlüssen 10, 15 der ersten und zweiten Gleichspannungsquelle 8, 11 ein neues Bezugspotential erhält. Bei einer solchen abgewandelten Vorrichtung 1 sind die Sperr- und Durchlaßfunktionen der Diode 23 und des Feldeffekttransistors 19 oder eines anderen Schutzelementes an die geänderte Polarität anzupassen. Dies kann beispielsweise durch ein Vertauschen der Anschlüsse dieser elektrischer Komponenten geschehen. Auch ist es möglich, im Fall eines Feldeffekttransistors einen anderen Typ zu verwenden, der wie zuvor beschrieben arbeitet, jedoch bei geänderter Polarität.

## Patentansprüche

1. Vorrichtung zur Bereitstellung einer Gleichspannung (2) mit einer ersten Anschlußanordnung (3, 4) für eine erste Gleichspannungsquelle (8) und einer zweiten Anschlußanordnung (5, 6, 7) für eine zweite Gleichspannungsquelle (11), wobei die Vorrichtung ein Schutzelement (18) aufweist, das in Reihe an einen ersten Anschluß (10) der ersten Anschlußordnung (3, 4) angeschlossen ist, **dadurch gekennzeichnet, daß** das Schutzelement (18) zusätzlich an der zweiten Anschlußanordnung (5, 6, 7) angeschlossen ist, wobei das Schutzelement (18) als Transistor ausgebildet ist, dessen Gatteranschluß (22) mit einem zweiten Anschluß (9) der ersten Anschlußanordnung (3, 4) verbunden ist und so bei einer Verpolung der ersten Gleichspannungsquelle (8) eine fehlerhafte Arbeitsweise der Vorrichtung verhindert, wobei der Gatteranschluß (22) des Transistors auch mit einem Steueranschluß (17) der zweiten Anschlußanordnung (5, 6, 7) verbunden ist, der den Transistor bei angeschlossener zweiter Gleichspannungsquelle (11) sperrt und damit einen Ladungsausgleich und ein Laden bzw. Entladen von einer Gleichspannungsquelle (8, 11) zur anderen Gleichspannungsquelle (8, 11) verhindert.

2. Vorrichtung nach Anspruch 1, **dadurch gekennzeichnet, daß** das Schutzelement (18) mit der ersten Gleichspannungsquelle (8) elektrisch in Reihe geschaltet ist.

3. Vorrichtung nach Anspruch 1 oder 2, **dadurch gekennzeichnet, daß** das Schutzelement (18) mit einem negativen Anschluß (10) der ersten Gleichspannungsquelle (8) verbunden ist.

4. Vorrichtung nach einem der Ansprüche 1 bis 3, **dadurch gekennzeichnet, daß** das Schutzelement (18) mit einem Bezugspotential (16) der Vorrichtung (1) verbunden ist.

5. Vorrichtung nach einem der Ansprüche 1 bis 4, **dadurch gekennzeichnet, daß** die zweite Gleichspannungsquelle (11) mit einer Reihenschaltung aus erster Gleichspannungsquelle (8) und Schutzelement (18) elektrisch parallel geschaltet ist.

6. Vorrichtung nach einem der Ansprüche 1 bis 5, **dadurch gekennzeichnet, daß** bei angeschlossener erster Gleichspannungsquelle (8) und angeschlossener zweiter Gleichspannungsquelle (11) ein Entladen der ersten Gleichspannungsquelle (8) verhindert ist.

7. Vorrichtung nach einem der Ansprüche 1 bis 6, **dadurch gekennzeichnet, daß** die erste Gleichspannungsquelle (8) eine niedrigere Ausgangsspannung aufweist als die zweite Gleichspannungsquelle (11).

8. Vorrichtung nach einem der Ansprüche 1 bis 7, **dadurch gekennzeichnet, daß** das Schutzelement (18) ein Feldeffekttransistor (19) ist mit mindestens einem Senkenanschluß (20), mindestens einem Quellenanschluß (21) und mindestens einem Gatteranschluß (22).

9. Vorrichtung nach Anspruch 8, **dadurch gekennzeichnet, daß** der Senkenanschluß (20) des Feldeffekttransistors (19) mit einem negativen Anschluß der ersten Anschlußanordnung (3, 4) verbunden ist.

10. Vorrichtung nach einem der Ansprüche 8 oder 9, **dadurch gekennzeichnet, daß** der Quellenanschluß (21) des Feldeffekttransistors (19) mit einem Bezugspotential (16) der Vorrichtung (1) verbunden ist.

11. Vorrichtung nach einem der Ansprüche 8 bis 10, **dadurch gekennzeichnet, daß** der Gatteranschluß (22) des Feldeffekttransistors (19) mit einem Steuerausgang (17) der zweiten Gleichspannungsquelle (11) verbunden ist.

12. Vorrichtung nach einem der Ansprüche 8 bis 11, **dadurch gekennzeichnet, daß** zwischen dem Gatteranschluß (22) des Feldeffekttransistors (19) und dem Bezugspotential (16) der Vorrichtung (1) eine Diode (23) angeordnet ist.

13. Vorrichtung nach einem der Ansprüche 8 bis 12, **dadurch gekennzeichnet, daß** zwischen dem Gatteranschluß (22) des Feldeffekttransistors (19) und einem positiven Anschluß (3) der ersten Anschlußanordnung (3, 4) ein ohmscher Widerstand (24) angeordnet ist.

14. Verfahren zur Bereitstellung einer Gleichspannung (2) mit einer Vorrichtung, die eine erste Anschlußanordnung (3, 4) für eine erste Gleichspannungsquelle (8) und eine zweite Anschlußanordnung (5, 6, 7) für eine zweite Gleichspannungsquelle (11) aufweist, wobei man ein Schutzelement (18) an einem ersten Anschluß (10) der ersten Anschlußanordnung (3, 4) anschließt und in Reihe mit dieser betreibt, **dadurch gekennzeichnet, daß** man das Schutzelement (18) gleichzeitig an der zweiten Anschlußanordnung (5, 6, 7) betreibt, wobei als Schutzelement (18) ein Transistor verwendet wird, an dessen Gatteranschluß (22) ein zweiter Anschluß (9) der ersten Anschlußanordnung (3, 4) angeschlossen wird und so bei einer Verpolung der ersten Gleichspannungsquelle (8) eine fehlerhafte Arbeitsweise der Vorrichtung verhindert, wobei am Gatteranschluß (22) des Transistors auch ein Steueranschluß (17) der zweiten Anschlußanordnung (5, 6, 7) angeschlossen wird, der den Transistor bei angeschlossener zweiter Gleichspannungsquelle (11) sperrt und damit einen Ladungsausgleich und ein Laden bzw. Entladen von der einen Gleichspannungsquelle (8, 11) zur anderen Gleichspannungsquelle (8, 11) verhindert.

15. Verfahren nach Anspruch 14, **dadurch gekennzeichnet, daß** man mit dem Schutzelement einen Ladungsausgleich von der zweiten Gleichspannungsquelle zur ersten Gleichspannungsquelle verhindert.

16. Verfahren nach einem der Ansprüche 14 oder 15, **dadurch gekennzeichnet, daß** ein Steuerausgang der zweiten Gleichspannungsquelle, der mit einem Gatteranschluß eines Feldeffekttransistors als Schutzelement verbunden ist, einen Spannungswert an dem Gatteranschluß abgibt in Abhängigkeit einer angeschlossenen zweiten Gleichspannungsquelle.

## Claims

1. Device for supplying a direct voltage (2) with a first connecting arrangement (3, 4) for a first direct voltage source (8) and a second connecting arrangement (5, 6, 7) for a second direct voltage source (11), the device having a protective element (18) that is connected in series to a first connection of the first connecting arrangement (3, 4), **characterised in that** the protective element (18) is additionally connected to the second connecting arrangement (5, 6, 7), the protective element (18) being made as a transistor, whose gate connection (22) is connected to a second connection (9) of the first connecting arrangement (3, 4), thus preventing, in the case of a reversed polarity of the first direct voltage source (8), an incorrect mode of operation of the device, the gate connection (22) of the transistor also being connected to a control connection (17) of the second connecting arrangement (5, 6, 7) that blocks the transistor when the second direct voltage source (11) is connected, thus preventing a charging equalisation and a charging or discharging of one direct voltage source (8, 11) to the other direct voltage source (8, 11).

2. Device according to claim 1, **characterised in that** the protective element (18) is electrically connected in series to the first direct voltage source (8).

3. Device according to claim 1 or 2, **characterised in that** the protective element (18) is connected to a negative connection (10) of the first direct voltage source (8).

4. Device according to one of the claims 1 to 3, **characterised in that** the protective element (18) is connected to a reference potential (16) of the device (1).

5. Device according to one of the claims 1 to 4, **characterised in that** the second direct voltage source (11) is electrically connected in parallel to a series connection of the first direct voltage source (8) and the protective element (18).

6. Device according to one of the claims 1 to 5**, characterised in that** with the connected first direct voltage source (8) and the connected second direct voltage source (11) a discharging of the first direct voltage source (8) is prevented.

7. Device according to one of the claims 1 to 6, **characterised in that** the first direct voltage source (8) has a lower output voltage than the second direct voltage source (11).

8. Device according to one of the claims 1 to 7, **characterised in that** the protective element (18) is a field-effect-transistor (19) with at least one drain connection (20), at least one source connection (21) and at least one gate connection (22).

9. Device according to claim 8, **characterised in that** the drain connection (20) of the field-effect-transistor (19) is connected to a negative connection of the first connecting arrangement (3, 4).

10. Device according to claim 8 or 9, **characterised in that** the source connection (21) of the field-effect-transistor (19) is connected to a reference potential (16) of the device (1).

11. Device according to one of the claims 8 to 10, **characterised in that** the gate connection (22) of the field-effect-transistor (19) is connected to a control outlet (17) of the second direct voltage source (11).

12. Device according to one of the claims 8 to 11, **characterised in that** a diode (23) is arranged between the gate connection (22) of the field-effect-transistor (19) and the reference potential (16) of the device (1).

13. Device according to one of the claims 8 to 12, **characterised in that** an ohmic resistor (24) is arranged between the gate connection (22) of the field-effect-transistor (19) and a positive connection (3) of the first connecting arrangement (3, 4).

14. Method of supplying a direct voltage (2) with a device comprising a first connecting arrangement (3, 4) for a first direct voltage source (8) and a second connecting arrangement (5, 6, 7) for a second direct voltage source (11), a protective element (18) being connected to a first connection (10) of the first connecting arrangement (3, 4) and being driven in series with said first connecting arrangement (3, 4), **characterised in that** the protective element (18) is simultaneously driven at the second connecting arrangement (5, 6, 7), the protective element (18) being a transistor whose gate connection (22) is connected to a second connection (9) of the first connecting arrangement (3, 4), thus preventing, in connection with a reversed polarisation of the first direct voltage source (8), an incorrect mode of operation of the device, a control connection (17) of the second connecting arrangement (5, 6, 7) also being connected to the gate connection (22) of the transistor, the control connection (17) blocking the transistor when the second direct voltage source (11) is connected, thus preventing a charging equalisation and a charging or discharging of one of the direct voltage sources (8, 11) to the other direct voltage source (8, 11).

15. Method according to claim 14, **characterised in that** the protective element is used to prevent a charging equalisation from the second direct voltage source to the first direct voltage source.

16. Method according to claim 14 or 15, **characterised in that** a control output of the second direct voltage source, which is connected to a field-effect-transistor used as protective element, supplies a voltage value to the gate connection in dependence of a connected second direct voltage source.

## Revendications

1. Dispositif pour fournir une tension continue (2), avec un premier ensemble de bornes (3, 4) pour une première source de tension continue (8) et un deuxième ensemble de bornes (5, 6, 7) pour une deuxième source de tension continue (11), dans lequel le dispositif présente un élément de protection (18) qui est connecté en série à une première borne (10) du premier ensemble de bornes (3, 4), **caractérisé en ce que** l'élément de protection (18) est en outre connecté au deuxième ensemble de bornes (5, 6, 7), dans lequel l'élément de protection (18) est réalisé comme un transistor dont la borne de grille (22) est reliée à une deuxième borne (9) du premier ensemble de bornes (3, 4) et empêche ainsi en cas d'inversion de polarité de la première source de tension continue (8) un fonctionnement erroné du dispositif, la borne de grille (22) du transistor étant également reliée à une borne de commande (17) du deuxième ensemble de bornes (5, 6, 7) qui inhibe le transistor lorsque la deuxième source de tension continue (11) est connectée et empêche ainsi une égalisation des charges et une charge ou décharge d'une source de tension continue (8, 11) à l'autre source de tension continue (8, 11).

2. Dispositif selon la revendication 1, **caractérisé en ce que** l'élément de protection (18) est connecté électriquement en série avec la première source de tension continue (8).

3. Dispositif selon la revendication 1 ou 2, **caractérisé en ce que** l'élément de protection (18) est relié à une borne négative (10) de la première source de tension continue (8).

4. Dispositif selon l'une quelconque des revendications 1 à 3, **caractérisé en ce que** l'élément de protection (18) est relié à un potentiel de référence (16) du dispositif (1).

5. Dispositif selon l'une quelconque des revendications 1 à 4, **caractérisé en ce que** la deuxième source de tension continue (11) est connectée électriquement en parallèle à une connexion série composée de la première source de tension continue (8) et de l'élément de protection (18).

6. Dispositif selon l'une quelconque des revendications 1 à 5, **caractérisé en ce que** lorsque la première source de tension continue (8) est connectée et la deuxième source de tension continue (11) est connectée, une décharge de la première source de tension continue (8) est empêchée.

7. Dispositif selon l'une quelconque des revendications 1 à 6, **caractérisé en ce que** la première source de tension continue (8) présente une tension de sortie inférieure à la deuxième source de tension continue (11).

8. Dispositif selon l'une quelconque des revendications 1 à 7, **caractérisé en ce que** l'élément de protection (18) est un transistor à effet de champ (19) avec au moins une borne de drain (20), au moins une borne de source (21) et au moins une borne de grille (22).

9. Dispositif selon la revendication 8, **caractérisé en ce que** la borne de drain (20) du transistor à effet de champ (19) est reliée à une borne négative du premier ensemble de bornes (3, 4).

10. Dispositif selon l'une quelconque des revendications 8 ou 9, **caractérisé en ce que** la borne de source (21) du transistor à effet de champ (19) est reliée à un potentiel de référence (16) du dispositif (1).

11. Dispositif selon l'une quelconque des revendications 8 à 10, **caractérisé en ce que** la borne de grille (22) du transistor à effet de champ (19) est reliée à une sortie de commande (17) de la deuxième source de tension continue (11).

12. Dispositif selon l'une quelconque des revendications 8 à 11, **caractérisé en ce qu'**une diode (23) est disposée entre la borne de grille (22) du transistor à effet de champ (19) et le potentiel de référence (16) du dispositif (1).

13. Dispositif selon l'une quelconque des revendications 8 à 12, **caractérisé en ce qu'**une résistance ohmique (24) est disposée entre la borne de grille (22) du transistor à effet de champ (19) et une borne positive (3) du premier ensemble de bornes (3, 4).

14. Procédé de fourniture d'une tension continue (2) avec un dispositif présentant un premier ensemble de bornes (3, 4) pour une première source de tension continue (8) et un deuxième ensemble de bornes (5, 6, 7) pour une deuxième source de tension continue (11), dans lequel un élément de protection (18) est connecté à une première borne (10) du premier ensemble de bornes (3, 4) et fonctionne en série avec celle-ci, **caractérisé en ce que** l'élément de protection (18) fonctionne simultanément au niveau du deuxième ensemble de bornes (5, 6, 7), dans lequel on utilise comme élément de protection (18) un transistor à la borne de grille (22) duquel une deuxième borne (9) du premier ensemble de bornes (3, 4) est connectée et empêche ainsi en cas d'inversion de polarité de la première source de tension continue (8) un fonctionnement erroné, dans lequel à la borne de grille (22) du transistor, une borne de commande (17) du deuxième ensemble de bornes (5, 6, 7) est également connectée qui inhibe le transistor lorsque la deuxième source de tension continue (11) est connectée et empêche ainsi une égalisation des charges et une charge ou décharge d'une source de tension continue (8, 11) à l'autre source de tension continue (8, 11).

15. Procédé selon la revendication 14, **caractérisé en ce que** l'élément de protection permet d'empêcher une égalisation des charges de la deuxième source de tension continue à la première source de tension continue.

16. Procédé selon l'une quelconque des revendications 14 ou 15, **caractérisé en ce qu'**une sortie de commande de la deuxième source de tension continue, qui est reliée à une borne de grille d'un transistor à effet de champ comme élément de protection, délivre une valeur de tension au niveau de la borne de grille en fonction d'une deuxième source de tension continue connectée.
